# EUROPÄISCHE PATENTSCHRIFT

(11) **EP 1 895 884 B1**
(45) Veröffentlichungstag und Bekanntmachung des Hinweises auf die Patenterteilung: **10.11.2010**
(21) Anmeldenummer: 06763835.3
(22) Anmeldetag: 22.06.2006
(51) Int. Cl.: A47L 9/28

(54) **STAUBSAUGER MIT BERÜHRUNGSLOSER WANDLUNG EINES LEISTUNGSSTELLERSSIGNALS**
VACUUM CLEANER WITH CONTACTLESS CONVERSION OF A POWER CONTROL SIGNAL
ASPIRATEUR CONVERTISSANT UN SIGNAL DE COMMANDE DE PUISSANCE SANS CONTACT

(30) Priorität: 29.06.2005 DE 102005030160
(43) Veröffentlichungstag der Anmeldung: 12.03.2008
(73) Patentinhaber: Vorwerk & Co. Interholding GmbH, 42275 Wuppertal (DE)
(72) Erfinder: FIESELER, Martin, 45134 Essen (DE)
(74) Vertreter: Müller, Enno
(86) Internationale Anmeldenummer: PCT/EP2006/063442
(87) Internationale Veröffentlichungsnummer: WO 2007/000406

(56) Entgegenhaltungen:
- WO-A-03/056996
- DE-A1- 4 316 641
- US-A- 3 857 076
- US-A- 4 052 767
- US-A- 5 226 527
- US-A- 6 108 862
- US-A1- 2002 170 137
- US-A1- 2004 135 537

## Beschreibung

Die Erfindung betrifft einen Staubsauger nach den Merkmalen des Oberbegriffs des Anspruches 1.

Staubsauger der in Rede stehenden Art sind bekannt. Diese verfügen in der Regel über ein Stellelement beispielsweise in Form eines Stufenschalters im Bereich des stielseitigen Handbetätigungsgriffes, mittels welchem Stellelement die Leistungssteuerung des in dem Basisgerät vorgesehenen Elektromotors einer Saug-/Gebläseeinheit und/oder die Steuerung eines in dem Vorsatzgerät vorgesehenen Elektromotors, beispielsweise bei Ausgestaltung des Vorsatzgerätes als Bürstgerät, vorgenommen werden kann. So ist beispielsweise aus der DE 197 20 949 A1 ein derartiger Staubsauger bekannt. Dieser verfügt über eine Stelleinheit in dem Betätigungsgriff. Ein weiterer Leistungssteller ist direkt an dem Basisgerät vorgesehen.

Bei einem aus der WO 03/056996 A1 bekannten Staubsauger wird die Stellinformation von dem Stiel zum Basisgerät durch eine Drehstange, unter mechanischer Kupplung, übertragen. Die US 3 857 076 A zeigt einen gegenüber dem Basisgerät insgesamt schiebeverlagerbaren Gerätestiel, der mit einer im Basisgerät angeordneten Sensorik (Fotozelle-Lichtzelle) zusammenwirkt. Diese Sensorik dient zur Erfassung der Stielverlagerung insgesamt, um zuwischen einer Zug- und Druckrichtung zu unterscheiden. Eine Bewegung des Stiels insgesamt relativ zu dem Basisgerät zeigt auch die US 2002/0170137 A1.

Die Erfindung beschäftigt sich mit der Aufgabe, einen Staubsauger der angegebenen Art hinsichtlich der Übertragung der zur Steuerung des Elektromotors erforderlichen Stellinformationen vorteilhaft auszubilden, wobei hinsichtlich des Stiels möglichst wenig Beschränkungen gegeben sein sollen.

Diese Aufgabe ist beim Gegenstand des Anspruches 1 gelöst, wobei darauf abgestellt ist, dass die Stellinformation durch eine jeweilige Position des mechanischen Elementes gegeben ist, dass die Umwandlung der Stellsignale in dem Basisgerät und/oder dem Vorsatzgerät durch grundsätzlich berührungslos mögliches, optisches, magnetisches oder elektromagnetisches Abfragen der Position des mechanischen Elementes erfolgt, dass die Stellinformation durch über die Länge unterschiedliche Formgebung des mechanischen Elementes gegeben ist und dass die unterschiedliche Formgebung über die Länge des mechanischen Elementes sich entsprechend der Teleskopierbarkeit des Stiels wiederholt.

Es ist demzufolge zunächst eine rein mechanische Übertragung der Stellinformation von der Stelleinheit zu der Abfrageeinheit realisiert, welch letztere bei einer Konfiguration mit einer stielseitigen Stelleinheit und einem hierüber zu steuernden Elektromotor im Basisgerät in letzterem angeordnet ist; konkret im Schnittstellenbereich zwischen Stiel- und Basisgerät. Auch kann über diese Konfiguration eine Leistungssteuerung eines über das Basisgerät sowohl strömungstechnisch als auch elektrisch angeschlossenen Vorsatzgeräts erreicht werden. Des weiteren kann auch das Basisgerät eine Stelleinheit in Form eines Stufenschalters oder dergleichen aufweisen, welcher gleichfalls rein mechanisch die nötige Stellinformation an eine in dem Vorsatzgerät, konkret im Schnittstellenbereich zwischen Basisgerät und Vorsatzgerät angeordnete Abfrageeinheit übermittelt. Bevorzugt überträgt hierbei das mechanische Element, welches im Falle des Stieles diesen durchsetzend sich zwischen der Stelleinheit und dem der Schnittstelle zum Basisgerät zugeordneten Ende des Stieles erstreckt, die durch Betätigung erreichte Verlagerung der Stelleinheit auf direktem Wege, so bspw. in einem Verhältnis von 1:1 oder darüber hinaus auch unter- bzw. übersetzt. Die Stellinformationsübermittlung erfolgt auf rein mechanischem Wege, zufolge dessen insbesondere ein Stiel mit Betätigungsgriff von einer Elektroversorgung abgekoppelt sein kann. Entsprechend sind keine elektrischen Verbindungen zwischen dem Stiel und dem Basisgerät zur Signalübertragung erforderlich. Im Falle der Stromversorgung des Elektromotors im Basisgerät durch direkten Anschluss von letzterem an das Haushaltsnetz kann der das Basisgerät führende Stiel gänzlich stromlos gehalten sein. Die Abtastung der mechanisch übermittelten Stellinformation erfolgt bevorzugt in dem den zu steuernden Elektromotor aufweisenden Geräteteil, so bspw. in dem Basisgerät, welches ohnehin eine Stromversorgung benötigt. Diese Auswertung erfolgt entweder über optisches, magnetisches oder elektromagnetisches Abfragen der Position des mittels der Stelleinheit zu verlagernden mechanischen Elements, wobei diese Abfrage grundsätzlich berührungslos möglich ist, wobei eine mögliche Berührung bevorzugt nur zum Zwecke der Führung oder Abstützung des mechanischen Elementes im Bereich des Abfrageelementes dient.

So ist in einer vorteilhaften Weiterbildung des Erfindungsgegenstandes vorgesehen, dass das mechanische Element eine Stange oder ein ggf. umlaufend angeordnetes Band ist. Bevorzugt wird hierbei ein stabiles, die exakte Übertragung durch Schiebeverlagerung des Elements gewährleistendes Übertragungsteil, so bspw. eine starre bzw. gegebenenfalls eine über die Längserstreckung vorgesehene Biegung des Stieles nachvollziehende, biegeschlaffe Stange oder Band, welch letztere zur gesicherten Signalübertragung in entsprechend ausgeführten Abschnitten des Stieles bzw. des Basisgerätes geführt ist. Das mechanische Element muss nicht zwingend stab- oder stangenartig mit jeweils einem der Stelleinheit und der Abfrageeinheit in dem zu steuernden Gerät zugewandten Ende sein. Vielmehr sind auch Lösungen denkbar, mit Endloselementen, wie bspw. umlaufend angeordnete Bänder, Schnüre oder dergleichen, die die benötigte Stellinformation übertragen. Die Betätigung der Stelleinheit bewirkt hierbei eine entsprechend umgesetzte Weiterverlagerung des Bandes oder dergleichen. In einer bevorzugten Ausgestaltung des Erfindungsgegenstandes ist vorgesehen, dass die optische Abfrage durch eine Lichtschranke erfolgt. Diese wird durchsetzt durch das mechanische Element - im Falle eines umlaufend angeordneten Bandes durchsetzt von einem entsprechend gekennzeichneten Bandabschnitt. Die Lichtschranke erfasst das Vorhandensein des mechanischen Elements bzw. eine Veränderung des mechanischen Elementes im Zuge der über die Stelleinheit bewirkten linearen Verlagerung des mechanischen Elements in Richtung seiner Langserstreckung. Die durch über die Länge unterschiedliche Formgebung des mechanischen Elements gegebene Stellinformation wird durch die Lichtschranke erfasst. Beispielsweise kann ein als Stange ausgeformtes mechanisches Element über die Länge betrachtet zueinander beabstandete, unterschiedliche Erhebungen und Absenkungen aufweisen, die durch die Abfrage erfasst werden. Die unterschiedliche Formgebung bildet einen Code zur eindeutigen Identifizierung der zu übermittelnden Stellinformation. Im Falle einer umlaufend angeordneten Schnur kann diese über ihre Länge unterschiedliche Kennfäden oder dergleichen aufweisen, die optisch erfasst werden können. In einer bevorzugten Ausgestaltung ist die unterschiedliche Formgebung durch Schlitze oder Einkerbungen gegeben, dies insbesondere bei einem als Stange ausgeformten Element. Die Schlitze und/oder Einkerbungen sind in Art eines Barcodes ein- bzw. aufgebracht. Deren Anordnung ergibt eine eindeutige Identifizierung des zu übermittelnden Stellsignals. Als besonders vorteilhaft erweist sich diesbezüglich weiter, dass die unterschiedliche Formgebung über die Länge des mechanischen Elements sich entsprechend der Teleskopierbarkeit des Stiels wiederholt, so dass unabhängig von der gewählten Teleskopstellung des Stieles zum Basisgerät durch Betätigung der Stelleinheit das geforderte Stellsignal eindeutig erfasst und übertragen wird. Es kann eine Mehrzahl von mechanischen Elementen vorgesehen sein, so entsprechend der Anzahl der verschiedenen Schaltstufen der Stelleinheit, so weiter bspw. bei einer Stelleinheit zur Steuerung des Elektromotors über drei Leistungsstufen vier mechanischer Elemente, wobei das vierte Element in Verbindung mit der Stelleinheit ein Stellsignal zum Ausschalten des Elektromotors überträgt. Entsprechend kann die Stelleinheit einen oder mehrere Stelltaster aufweisen. Bei mehreren Stelltastern ist jedem mechanischen Element ein solcher direkt zugeordnet. Der Stelltaster kann als Stellhebel ausgebildet sein, der durch bspw. Daumendruck um eine Achse schwenkverlagert wird, wobei über eine Gelenkstelle das mechanische Element um einen definierten Weg linear verlagert wird. Dieser Verlagerungsweg entspricht mindestens der Länge des Elementabschnittes, auf welchem die unterschiedlichen Formgebungen als Stellinformation abgelegt sind. Auch kann der Stelltaster als Stellrad ausgebildet sein. Schließlich wird vorgeschlagen, dass der Stelltaster in seine Ausgangsstellung vorgespannt ist. Diese Ausgangsstellung ist eine Neutralstellung, in welcher keine Stellinformationen durch die optische Abfrage erfasst wird. Es gilt die letzt erfasste Stellinformation zur Steuerung des Elektromotors.

Nachstehend ist die Erfindung anhand der beigefügten Zeichnung, welche lediglich zwei Ausführungsbeispiele darstellt, näher erläutert. Es zeigt:
- Fig. 1: in perspektivischer Darstellung einen erfindungsgemäßen Staubsauger mit einem an einem Basisgerät steckverbundenen, teleskopierbaren Stiel;
- Fig.: 2 die Herausvergrößerung des Bereiches II in Fig. 1;

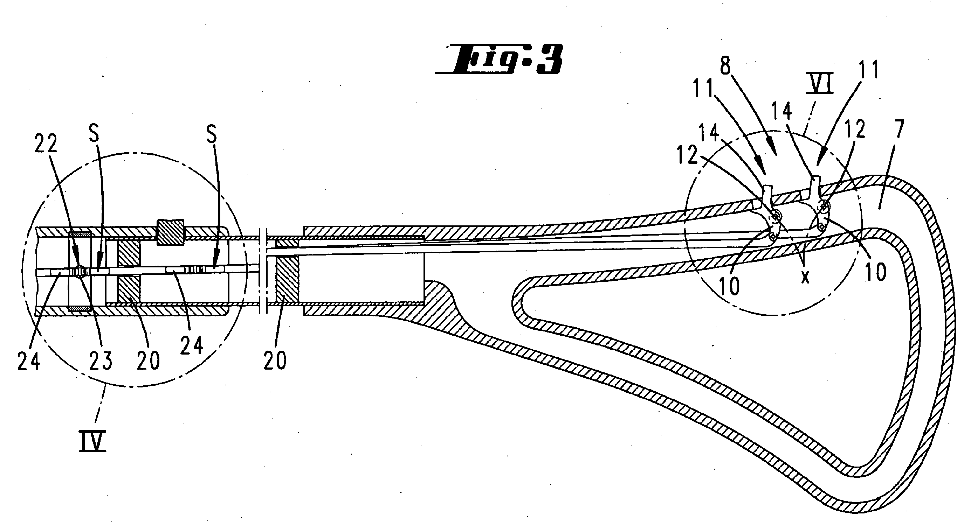

- Fig. 3: den Längsschnitt durch den Bereich eines Betätigungsgriffes des Stiels und dem Steckverbindungsbereich zwischen Stiel und Basisgerät;

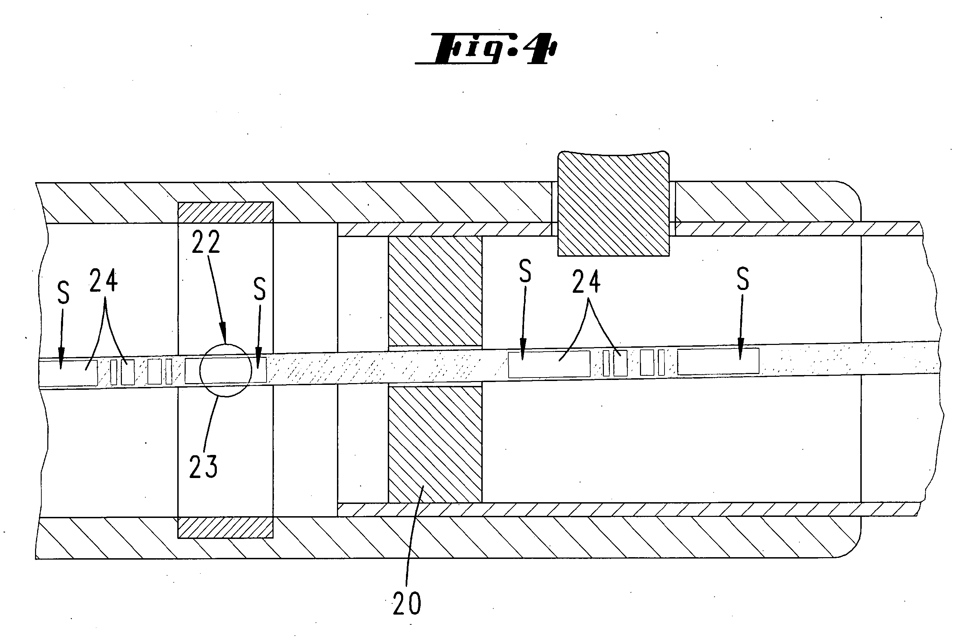

- Fig. 4: die Herausvergrößerung des Bereiches IV in Fig. 3;

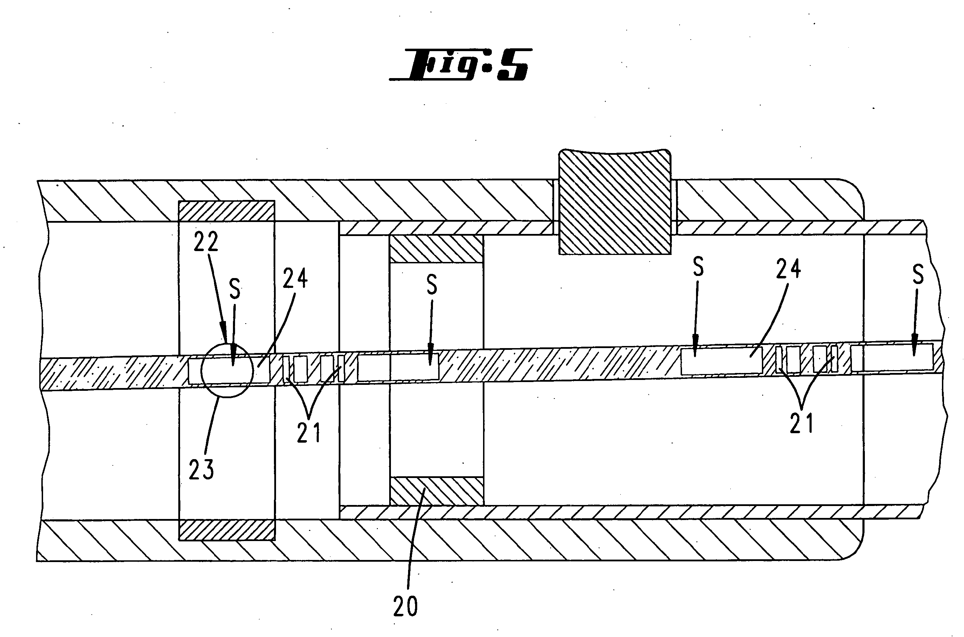

- Fig. 5: eine der Fig. 4 entsprechende Schnittdarstellung, jedoch nach Verlage- rung eines in dem Stiel geführten mechanischen Elements;
- Fig. 6: die Herausvergrößerung des Bereiches VI in Fig. 3;
- Fig. 7: eine der Fig. 6 entsprechende Schnittdarstellung, jedoch bei Betätigung eines Stelltasters zur Verlagerung des mechanischen Elements in die in Fig. 5 dargestellte Stellung;
- Fig. 8: in einer perspektivischen Darstellung vier Stelltaster mit angelenkten, unterschiedliche Formgebungen aufweisenden mechanischen Elementen und einer die Formgebungen abtastenden Lichtschranke;
- Fig. 9: eine Schnittdarstellung gemäß Fig. 6, jedoch eine alternative Ausgestal- tung des Stelltasters als Stellrad betreffend.

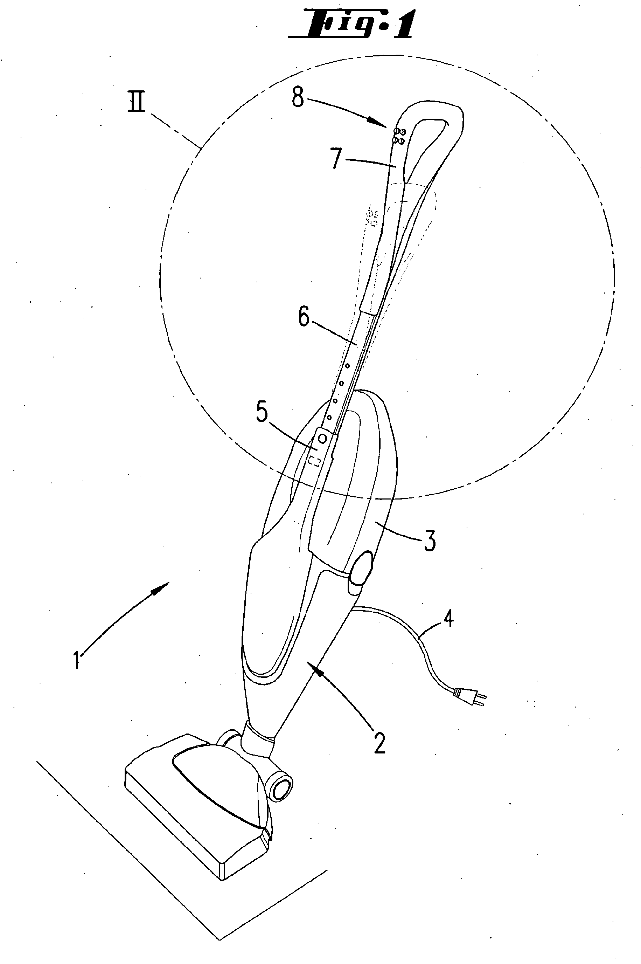

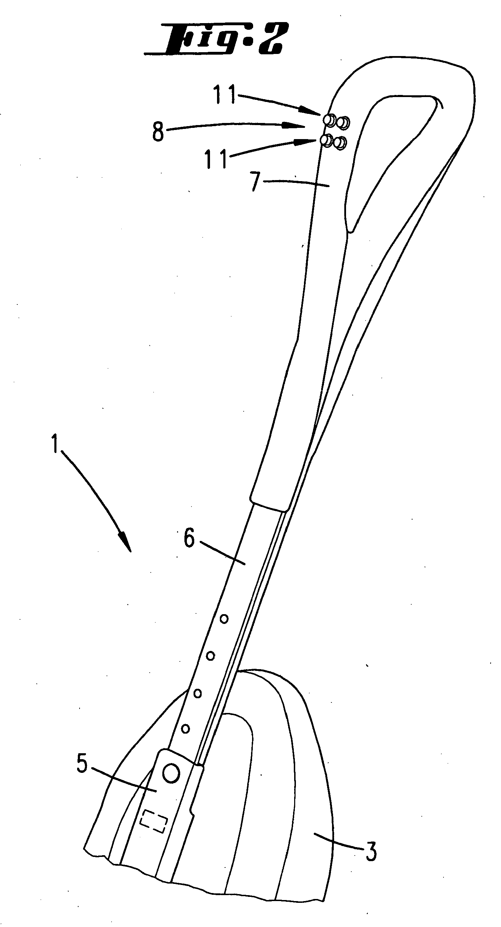

Dargestellt und beschrieben ist, zunächst mit Bezug zu Fig. 1, ein Staubsauger 1, insbesondere Haushalts-Staubsauger, welcher als handgeführtes Stielgerät ausgeführt ist. Dieses weist zunächst ein Basisgerät 2 auf, mit einem nicht näher dargestellten Elektromotor für eine Saug-/Gebläse-Einheit. An dem Basisgerät 2 ist eine zur Aufnahme des aufgesaugten Staubgutes vorgesehene Filterkassette 3 angedockt. Diese beinhaltet einen nicht dargestellten Filterbeutel.

Die Stromversorgung des in dem Basisgerät 2 integrierten Elektromotors erfolgt über ein in das Basisgerät 2 einlaufendes Elektrokabel 4.

Weiter besitzt das Basisgerät 2 einen schwanenhalsförmigen Fortsatz, welcher sich über den Bereich der Filterkassette 3 erstreckt. Im Bereich des freien Endes formt dieser Fortsatz eine Steckaufnahme 5 für einen Stiel 6 des Staubsaugers 1 aus. Die zugeordneten Enden von Aufnahme 5 und Stiel 6 sind in bekannter Weise als mechanische Steckverbindungselemente ausgebildet. Im Bereich des freien Endes des Stieles 6 ist ein Betätigungsgriff 7 ausgeformt. Dieser weist an ergonomisch günstiger Position eine daumenbetätigbare Stelleinheit 8 auf, über welche die Leistung des in dem Basisgerät 2 aufgenommenen Elektromotors einstellbar ist, zufolge dessen die Saugleistung des Staubsaugers 1 bspw. anpassbar an den Bodenbelag ist.

Zur Bodenbearbeitung ist das Basisgerät 2 strömungsmäßig mit einem Vorsatzgerät 9 verbunden. Dieses kann eine eine rotierte Bürste aufweisende Saugdüse sein.

Zur Steuerung des Elektromotors in dem Basisgerät 2 wird eine Stellinformation vom Betätigungsgriff 7 bzw. von der Stelleinheit 8 zum Basisgerät 2 geleitet und dort von einem Informationsempfänger erfasst. Diese Information wird mittels einer Auswerteelektronik zur Ansteuerung des Elektromotors genutzt.

Die betätigungsgriffseitige Stelleinheit 8 weist vier vereinzelte, als Stellhebel 10 ausgebildete Stelltaster 11 auf, welche ergonomisch günstig im mit dem Daumen zu erfassenden Bereich platziert sind.

Diese Stelltaster 11 sind in dem Betätigungsgriff 7 jeweils um eine quer zur Längserstreckung des Stieles 6 ausgerichtete Schwenkachse x gelagert. Von dem an den die Schwenkachse x ausformenden Achskörper 12 ausgehenden Tasterabschnitt gehen entgegengerichtete Schenkel ab, von welchen einer einen den Betätigungsgriff 7 im Bereich einer entsprechend vorgesehenen Öffnung 13 durchsetzenden Tastabschnitt 14 ausformt. Dieser ist griffinnenseitig der Öffnung 13 mit einem etwa radial abragenden Anschlagabschnitt 15 versehen, zur anschlagbegrenzten Anlage des Stelltasters 11 im Öffnungsrandbereich, zur Definition einer Tastergrundstellung.

Der dem Tastabschnitt 14 abgewandte, von dem Achskörper 12 abgehende Schenkel ist ein Lenkerabschnitt 16, an dessen freiem Ende über eine parallel zum Achskörper 12 ausgerichtete Achse 17 ein sich durch den Betätigungsgriff 7 und den Stiel 6 erstreckendes, stangenförmiges mechanisches Element 18 angelenkt ist.

In dem dargestellten Ausführungsbeispiel ist das mechanische Element 18 bandförmig gebildet mit einer Dicke, die eine gewisse Eigenstabilität des Elements 18 gewährleistet. Die Ausrichtung ist hierbei so gewählt, dass die Anlenkachse 17 das Element 18 im Bereich der Breitseitenflächen durchsetzt.

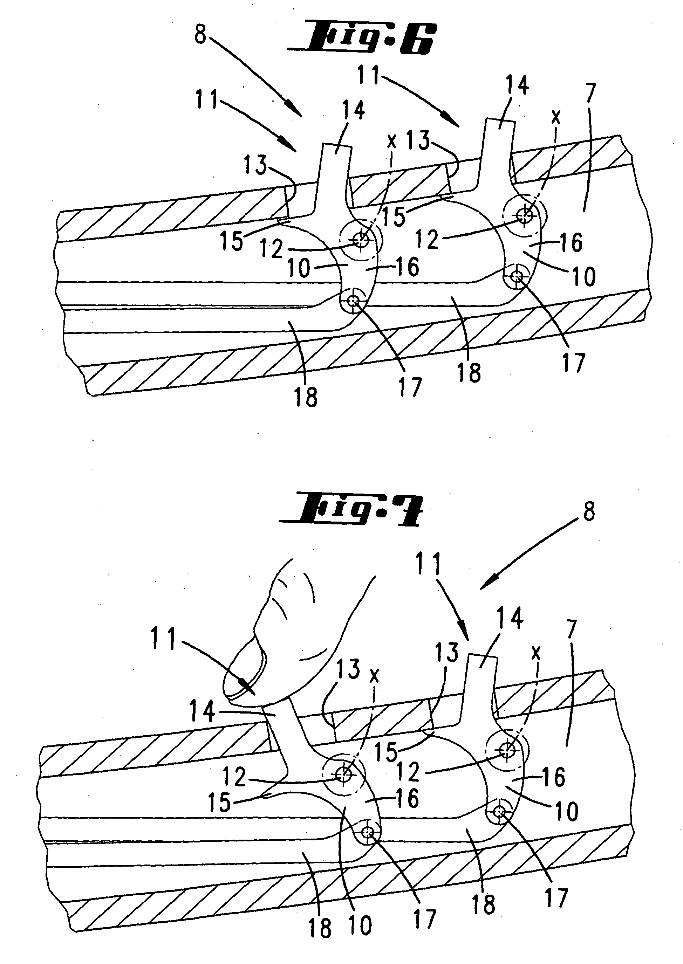

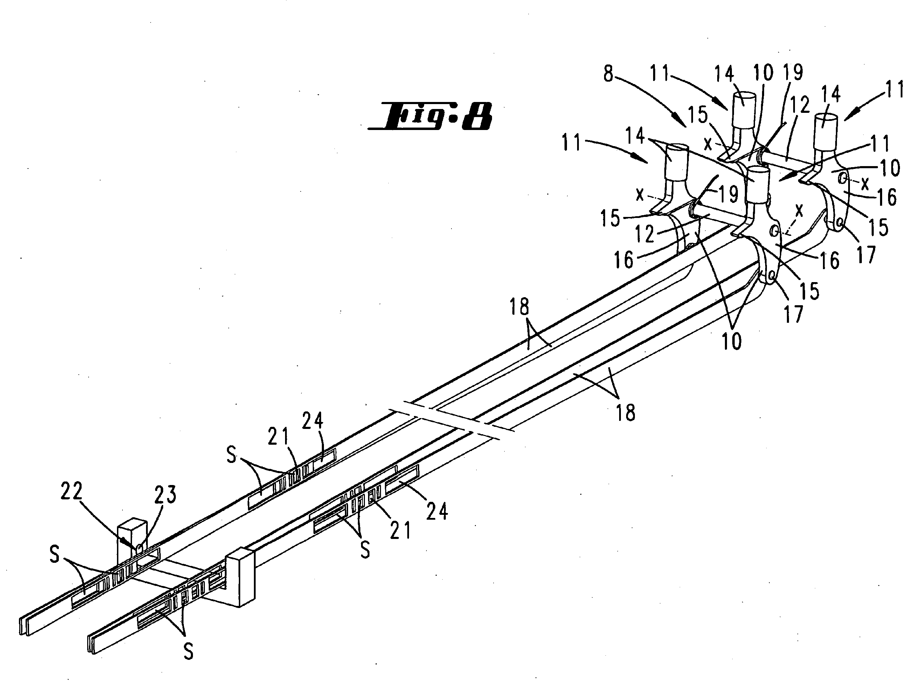

Wie insbesondere aus der Perspektivdarstellung in Fig. 8 zu erkennen, sind die Stelltaster 11 mittels auf den Achskörpern 12 angeordneter Schenkelfedern 19 in die bspw. in Fig. 6 dargestellte Grundstellung vorgespannt, wobei ein Schenkel der Schenkelfeder 19 sich an der die Öffnungen 13 aufweisenden Decke des hohlförmigen Betätigungsgriffes 7 abstützt, während der andere Schenkel unterseitig gegen den Anschlagabschnitt 15 des Stelltasters 11 wirkt.

Die sich durch den Stiel 6 bis zum der Steckaufnahme zugewandten Endbereich und über dieses offene Stielende hinaus erstreckenden stangenförmigen Elemente 18 sind in dem Stiel 6 bzw. in dem Betätigungsgriff 7 geführt. In den Darstellungen sind zwei Führungszonen 20 schematisch dargestellt. Eine dieser Führungszonen 20 ist endseitig des Stieles 6 vorgesehen, um einen definierten Elementaustritt aus dem Stiel 6 zu erbringen. Jedes mechanische Element 18 ist mit einer dem jeweiligen Stelltaster 11 zugeordneten Stellinformation versehen, dies durch eine erfassbare, unterschiedliche Formgebung durch Schlitze 21. Diese Schlitze 21 sind insbesondere im über den Stiel 6 hinausragenden Endbereich des Elements 18 vorgesehen und sind in ihrer Anordnung und Breite zur Unterscheidung der verschiedenen Stellinformationen der in dem Ausführungsbeispiel vorgesehenen vier Elemente 18 unterschiedlich gewählt. Auch innerhalb eines Elementes 18 sind die in Längserstreckung desselben hintereinander angeordneten Schlitze 21 verschiedenartig in ihrer Breite - d.h. in Längserstreckung des Elements -. Es ergibt sich eine Art Barcode auf jedem mechanischen Element 18, welcher Barcode basisgerätseitig, im Bereich der Steckaufnahme 5 durch eine optische Abfrage 22 in Form einer Lichtschranke 23 erfassbar ist.

In Längserstreckung des Elementes 18 ist beidseitig einer Stellinformations-Schlitzanordnung S ein im Grundriss langgestreckt rechteckiges Fenster 24 vorgesehen. Durch eines dieser Fenster 24 tritt in der federbelasteten, anschlagbegrenzten Grundstellung von Element 18 und Stelltaster 11 ungehindert der Lichtstrahl der Gabellichtschranke 23.

Durch Betätigen des Stelltasters 11 und damit einhergehender Schwenkverlagerung des Lenkerabschnitts 16 um die Schwenkachse x wird eine Linearverlagerung des mechanischen Elements 18 herbeigerufen, was wiederum das Durchführen der barcodeartigen Stellinformations-Schlitzanordnung S durch den Bereich der Gabellichtschranke 23 veranlasst. Das hierbei durch die optische Abfrage 22 erfasste Lichtsignal wird über eine nicht weiter dargestellte Elektronik ausgewertet und in ein Stellsignal für den Elektromotor umgewandelt.

Nach Loslassen des betätigten Stelltasters 11 wird dieser aufgrund der beschriebenen Federeinwirkung in die Grundstellung zurückbewegt, dies einhergehend mit einer linearen Rückverlagerung des mechanischen Elementes 18 in die Ausgangsstellung, in welcher der Lichtstrahl der Gabellichtschranke 23 wieder ungehindert durch das elementseitige Fenster 24 treten kann.

Grundsätzlich durchtritt der Lichtstrahl der Gabellichtschranke in Grundstellung des Stelleinheit-Systems, d.h. bei Nichtbetätigung der Stelltaster 11 die in Hintereinanderlage angeordneten Fenster 24 der vorgesehenen vier mechanischen Elemente 18. Aus dieser Grundstellung heraus wird durch Betätigung eines der Stelltaster 11 ein charakterisierendes Schlitzmuster durch die Gabellichtschranke 23 geführt, welches den entsprechend hinterlegten Befehl bewirkt.

Wie weiter aus den Darstellungen zu erkennen, ist der Stiel 6 in bekannter Weise teleskopierbar eingestellt. Um die Stellinformation durch Zusammenwirkung von geräteseitiger Lichtschranke 23 und stielseitigem Schlitzmuster unabhängig von der gewählten Teleskopstellung zu übertragen, weist jedes mechanische Element 18 abstandsmäßig und hinsichtlich der Anzahl angepasst an die Teleskopierbarkeit des Stieles 6 platzierte Schlitzmuster bzw. Stellinformations-Schlitzanordnungen S in vorgeschriebener, sich wiederholender Weise auf.

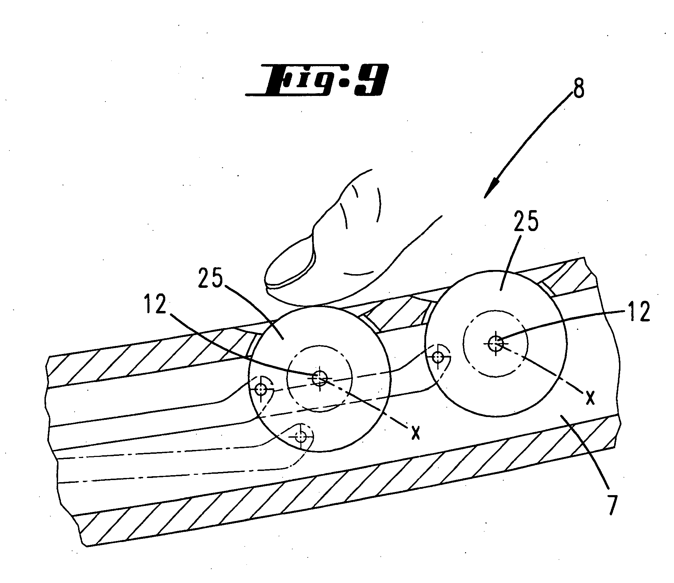

Alternativ zu den beschriebenen hebelförmigen Stelltastern 11 können auch, wie beispielhaft in Fig. 9 dargestellt, Stellräder 25 vorgesehen sein, an welchen griffinnenseitig jeweils ein stangenförmiges mechanisches Element 18 angelenkt ist Durch Abrollbewegung eines Fingers auf der nach außen hin freigelegten Mantelfläche eines Stellrades 25 wird eine Relativverlagerung des Elementes 18 im Wesentlichen in Längserstreckung desselben bewirkt.

Die erfindungsgemäße Leistungsstellung erfolgt durch optisches Abtasten einer stielseitigen Mechanik. Hierdurch ist eine elektrische Isolation des Stieles und des Betätigungsgriffes 7 gewährleistet Es wird hierbei keine Energie zur Leistungsstellung bzw. zur Befehlsgabe benötigt. Die Leistungsstellung kann über mechanische Tipptasten erreicht werden. Weiter ist das System tolerant gegen mechanische Verformung, wobei der Mechanismus als solches einfach und kostengünstig herstellbar ist.

## Patentansprüche

1. Staubsauger (1) mit einem einen Elektromotor aufweisenden Basisgerät (2) und einem hiermit steckverbindbaren Stiel (6) mit Betätigungsgriff (7) und/oder einem einen Elektromotor aufweisenden Vorsatzgerät (9), mit einer Stelleinheit (8) zur Steuerung der Leistung des Elektromotors, wobei eine zur Steuerung der Leistung des Elektromotors erforderliche Stellinformation von dem Stiel (6) zum Basisgerät (2) und/oder Vorsatzgerät (9) mechanisch übertragen wird und dort in ein entsprechendes Stellsignal für den Elektromotor umgewandelt wird, und der Stiel (6) teleskopierbar ist, **dadurch gekennzeichnet, dass** die Stellinformation durch eine jeweilige Position des mechanischen Elementes (18) gegeben ist, dass die Umwandlung des Stellsignals in dem Basisgerät (2) und/oder Vorsatzgerät (9) durch grundsätzlich berührungslos mögliches optisches, magnetisches oder elektromagnetisches Abfragen der Position des mechanischen Elementes (18) erfolgt, dass die Stellinformation durch über die Länge unterschiedliche Formgebung des mechanischen Elementes (18) gegeben ist und dass die unterschiedliche Formgebung über die Länge des mechanischen Elementes (18) sich entsprechend der Teleskopierbarkeit des Stiels (6) wiederholt.

2. Staubsauger nach Anspruch 1, **dadurch gekennzeichnet, dass** das mechanische Element (18) eine Stange oder ein gegebenenfalls umlaufend angeordnetes Band ist.

3. Staubsauger nach einem der vorhergehenden Ansprüche, **dadurch gekennzeichnet, dass** die optische Abfrage (22) durch eine Lichtschranke 23) erfolgt.

4. Staubsauger nach einem der vorhergehenden Ansprüche, **dadurch gekennzeichnet, dass** die unterschiedliche Formgebung durch Schlitze (21) oder Einkerbungen gegeben ist.

5. Staubsauger nach einem der vorhergehenden Ansprüche, **dadurch gekennzeichnet, dass** eine Mehrzahl von mechanischen Elementen (18) vorgesehen ist.

6. Staubsauger nach einem der vorhergehenden Ansprüche, **dadurch gekennzeichnet, dass** die Stelleinheit (8) einen oder mehrere Stelltaster (11) aufweist.

7. Staubsauger nach Anspruch 6, **dadurch gekennzeichnet, dass** der Stelltaster (11) als Stellhebel (10) ausgebildet ist.

8. Staubsauger nach Anspruch 6, **dadurch gekennzeichnet, dass** der Stelltaster (11) als Stellrad (25) ausgebildet ist.

9. Staubsauger nach einem der Ansprüche 6 bis 8, **dadurch gekennzeichnet, dass** der Stelltaster (11) in seine Ausgangsstellung vorgespannt ist.

## Claims

1. A vacuum cleaner (1) comprising a base unit (2), which has an electric motor, and a shank (6) which can be plug-connected to said base unit and has an operating handle (7) and/or an attachment (9) which has an electric motor, and the vacuum cleaner also comprising a control unit (8) for controlling the power of the electric motor, control information which is required to control the power of the electric motor being mechanically transmitted from the shank (6) to the base unit (2) and/or the attachment (9) and there being converted into a corresponding control signal for the electric motor, and the shank (6) being telescopable, **characterized in that** the control information is provided by a respective position of the mechanical element (18), **in that** the conversion of the control signal in the base unit (2) and/or the attachment (9) is effected by interrogation of the position of the mechanical element (18), which interrogation is basically contactless and may be optical, magnetic or electromagnetic, **in that** the control information is provided by different shaping of the mechanical element (18) over its length, and **in that** the different shaping over the length of the mechanical element (18) is repeated in accordance with the telescoping capability of the shank (6).

2. A vacuum cleaner according to Claim 1, **characterized in that** the mechanical element (18) is a rod, or a strip which may optionally be disposed circumferentially.

3. A vacuum cleaner according to either of the preceding claims, **characterized in that** the optical interrogation (22) is performed by a light barrier (23).

4. A vacuum cleaner according any of the preceding claims, **characterized in that** the different shaping is provided by slots (21) or notches.

5. A vacuum cleaner according to any of the preceding claims, **characterized in that** a multiplicity of mechanical elements (18) is provided.

6. A vacuum cleaner according to any of the preceding claims, **characterized in that** the control unit (8) has one or more control switches (11).

7. A vacuum cleaner according to Claim 6, **characterized in that** the control switch (11) is in the form of a control lever (10).

8. A vacuum cleaner according to Claim 6, **characterized in that** the control switch (11) is in the form of a control wheel (25).

9. A vacuum cleaner according to any of Claims 6 to 8, **characterized in that** the control switch (11) is biased into its starting position.

## Revendications

1. Aspirateur (1) avec un appareil de base (2) présentant un moteur électrique et un manche (6) pouvant s'y raccorder par enfichage et ayant une poignée de commande (7) et/ou un appareil adaptable (9) présentant un moteur électrique, avec une unité de réglage (8) pour commander la puissance du moteur électrique, dans lequel une information de réglage nécessaire pour commander la puissance du moteur électrique est transmise mécaniquement du manche (6) à l'appareil de base (2) et/ou à l'appareil adaptable (9) et y est transformée en un signal de réglage correspondant pour le moteur électrique, et le manche (6) est télescopique, **caractérisé en ce que** l'information de réglage est assurée par une position respective de l'élément mécanique (18), **en ce que** la transformation du signal de réglage dans l'appareil de base (2) et/ou l'appareil adaptable (9) s'effectue par une interrogation optique, magnétique ou électromagnétique éventuelle, en principe sans contact, de la position de l'élément mécanique (18), **en ce que** l'information de réglage est assurée par la conformation, différente sur la longueur, de l'élément mécanique (18) et **en ce que** la conformation, différente sur la longueur, de l'élément mécanique (18) se répète en fonction de la capacité télescopique du manche (6).

2. Aspirateur selon la revendication 1, **caractérisé en ce que** l'élément mécanique (18) est une barre ou une lame agencée éventuellement en périphérie.

3. Aspirateur selon l'une quelconque des revendications précédentes, **caractérisé en ce que** l'interrogation optique (22) s'effectue par le biais d'une barrière lumineuse (23).

4. Aspirateur selon l'une quelconque des revendications précédentes, **caractérisé en ce que** la conformation différente est assurée par des fentes (21) ou des rainures.

5. Aspirateur selon l'une quelconque des revendications précédentes, **caractérisé en ce qu'**il est prévu une pluralité d'éléments mécaniques (18).

6. Aspirateur selon l'une quelconque des revendications précédentes, **caractérisé en ce que** l'unité de réglage (8) présente un ou plusieurs boutons-poussoirs de réglage (11).

7. Aspirateur selon la revendication 6, **caractérisé en ce que** le bouton-poussoir de réglage (11) se présente sous la forme d'un levier de réglage (10).

8. Aspirateur selon la revendication 6, **caractérisé en ce que** le bouton-poussoir (11) se présente sous la forme d'une molette de réglage (25).

9. Aspirateur selon l'une quelconque des revendications 6 à 8, **caractérisé en ce que** le bouton-poussoir de réglage (11) est pré-sollicité dans sa position de départ.
